# EUROPÄISCHE PATENTSCHRIFT

(11) **EP 0 643 343 B1**
(45) Veröffentlichungstag und Bekanntmachung des Hinweises auf die Patenterteilung: **18.11.1998**
(21) Anmeldenummer: 93114778.9
(22) Anmeldetag: 14.09.1993
(51) Int. Cl.: G05B 19/4103

(54) **Verfahren zur numerischen Bahnsteuerung von mehrachsigen Maschinen**
Numerical contouring control method for multiple axis machines
Méthode de commande de contournage numérique pour machines à axes multiples

(43) Veröffentlichungstag der Anmeldung: 15.03.1995
(73) Patentinhaber: SIEMENS AKTIENGESELLSCHAFT, 80333 München (DE)
(72) Erfinder: Basilowski, Herbert, Dipl.-Ing. (FH), D-91080 Spardorf (DE); Eichelkamp, Harald, Dipl.-Ing., D-09119 Chemnitz (DE); Uhlich, Andreas, Dipl.-Ing. (FH), D-90530 Wendelstein (DE)

(56) Entgegenhaltungen:
- EP-A- 0 513 417
- DE-U- 9 206 933
- GB-A- 2 026 725
- GB-A- 2 146 796
- US-A- 3 806 713
- US-A- 4 343 206
- US-A- 4 983 899
- SIEMENS ENERGY & AUTOMATION Bd. 13, Nr. 6 , November 1991 , BERLIN DE M. KRAFT ET AL 'Producing Sculptured Curves with CNC'

## Beschreibung

Die Erfindung bezieht sich auf ein Verfahren zur numerischen Bahnsteuerung von mehrachsigen Maschinen mit folgenden Schritten:
1.1 für eine von der Maschine abzufahrende Bahnkurve, werden an ausgewählten und/oder vorberechneten Positionen Bahnsteuerdaten ermittelt und in einem Speicher abgelegt,
1.2 jeder zusammengehörigen Menge von Bahnsteuerdaten wird ein eindimensionaler Zeiger zugeordnet,
1.3 zur Steuerung der Bahnkurve werden die Bahnsteuerdaten durch Vorgabe einer Zeigerwertfolge abgerufen.

Die Bearbeitung von Konturen, die nicht durch geometrische Elemente wie Kreis oder Gerade eindeutig zu beschreiben sind, stellt immer schon ein gewisses Problem in der Technik der numerisch gesteuerten Maschinen dar. Im Regelfall werden beliebige Konturen durch möglichst kurze Geradenstücke bzw. Kreisabschnitte angenähert.

Die erreichbare Genauigkeit und Bearbeitungsgeschwindigkeit sind durch die Interpolationstaktzeit und die Blockzykluszeit der numerischen Steuerung sowie die einstellbare Kreisverstärkung im Lagerregelkreis begrenzt. Zur Abhilfe wurden Steuerungsfunktionen entwickelt, die eine Art elektronisches Kopieren auf Lagerreglerebene möglich machen. Die zu "kopierende" Figur wird in Form einer Tabelle fest um Speicherbereich der numerischen Steuerung abgelegt. Das Laden und die Berechnung der Tabellen wird entweder über ein Teileprogramm der numerischen Steuerung oder direkt über eine V24-Schnittstelle von einem externen Rechner oder einem busgekoppelten Rechner der Steuerung vorgenommen.

Der Aufbau der Tabelle ist zumeist so, daß der Position einer Basisachse eine feste Sollposition einer Folgeachse zugeordnet wird. Aufgrund des minimalen Rechenaufwandes ist damit eine schnellere Bearbeitung von z.B. Unrundkonturen wie Nokkenwellen, Exzentern und Polygonprofilen möglich.

Die Bearbeitung einer komplexen geometrischen Figur ist mit dieser Art der Tabelleninterpolation entweder überhaupt nicht oder nur bedingt möglich, da hier z.B. dem gleichen Wert der Basisachse mehrere Werte der Folgeachse zugeordnet sein können. Die Auswertung, welcher dieser Punkte gerade seine Gültigkeit hat, kann aber nicht Gegenstand einer schnellen Tabelleninterpolation sein. Ein einfaches Beispiel für eine derartige Möglichkeit, ist z.B. das Abarbeiten eine Vollkreises. Hier sind jedem Wert der X-Basisachse zwei Y-Werte der Folgeachse zugeordnet.

Ein Verfahren der eingangs genannte Art ist im deutschen Gebrauchsmuster DE-U-92 06 933 bekannt. Dort wird, um eine eindeutige Bahnsteuerung für komplexe Bearbeitungsvorgänge zu erzielen, eine Zeigerparametrierung vorgesehen, wobei für ausgewählte, vorberechnete Punkte einer zu fahrenden Werkzeugkontur achsspezifische Positionswerte in Tabellenform abgespeichert werden und jeder zusammenhängenden Menge von Positionswerten ein eindimensionaler, achsunabhängiger Zeigerwert zugeordnet wird. Die zu fahrende Bahn sowie die Bahngeschwindigkeit ist dabei durch die vorgegebenen Zeigerwertfolgen und deren Änderungsgeschwindigkeit bestimmt.

Bei dieser Lösung war es bisher nicht möglich, eine Werkzeugradiuskorrektur sowie eine Korrektur von verschiedenen Fehlereinflüssen zu erreichen, so daß ein öfteres Umladen der Tabellenwerte bei sich ändernden Prozeßparametern, die beispielsweise durch Werkzeugabnutzung oder durch Temperatureinfluß bedingt sind, nowendig war. Um die dadurch entstandenen Bearbeitungsnebenzeiten möglichst kurz zu halten, wurden bisher beispielsweise bei Schleifmaschinen die Tabellenwerte erst dann umgeladen, wenn die Konturverzerrungen und die Vorschubverfälschungen an der Kontur zu hohe Werte annahmen.

Des weiteren ist aus der US-A-4 343 206 eine Wichtung von Einflußgrößen für Mehrachssteuerungen bekannt.

Aufgabe der Erfindung ist es, das aus dem genannten Gebrauchsmuster bekannte Verfahren soweit zu verbessern, daß die genannten Nachteile beseitigt werden.

Dies wird für ein derartiges Verfahren durch die folgenden weiteren Schritte erreicht:
1.4 jedem Bahnsteuerdatum werden zeigerwertbezogen soviele Korrekturwerte hinzugefügt, wie zu berücksichtigende Fehlergrößen vorliegen,
1.4 jedes Bahnsteuerdatum und jeder Korrekturwert ist mit einer Wichtungsgröße verknüpfbar,
1.5 die gewichteten Bahnsteuerdaten werden als Stellgrößen an die Bahnsteuervorrichtungen der beteiligten Achsen ausgegeben,
1.5 für sich periodische wiederholende Achsbewegungen sind die Bahnsteuerdaten mit den zugeordneten Zeigern nur für eine Periode erstellbar und die Folgeperioden werden durch Addition der Bahnsteuerdaten des jeweils letzten Zeigerwertes zum ersten Zeigerwert erzeugt.

Dadurch ist es möglich, die Tabellenlänge kurzzuhalten, in dem für sich wiederholende Achsbewegungen die Bahnsteuerdaten mit den zugeordneten Zeigern nur für eine Periode erstellbar sind und die Folgeperioden durch Addition der Bahnsteuerdaten des jeweils letzten Zeigerwertes zum ersten Zeigerwert erzeugt wird.

Die einem Zeiger zugeordneten Bahnsteuerdaten bilden also sogenannte Zeigerwerte, welche die Positionen der Bahnkurve beschreiben. Wenn zusätzliche Bahnsteuerdaten benötigt werden, die zwischen zwei Zeigerwerten liegen, so können diese durch lineare, zirkuläre oder eine andere Interpolationsmethode zwischen zwei aufeinanderfolgenden Zeigerwerten erzeugt werden.

Ein Ausführungsbeispiel der Erfindung wird im folgenden anhand der Zeichnung beschrieben. Dabei zeigen:
- FIG 1: eine mehrdeutige, gekrümmte Kontur mit Zeigerparametrierung,
- FIG 2: das Blockschaltbild einer Steuerung zur Generierung von Stellgrößen mittels Tabelleninterpolation,
- FIG 3: ein Werkstückformteil für die Flaschenherstellung,
- FIG 4: eine Methode zur Tabellenkettung für periodische Achsbewegungen.

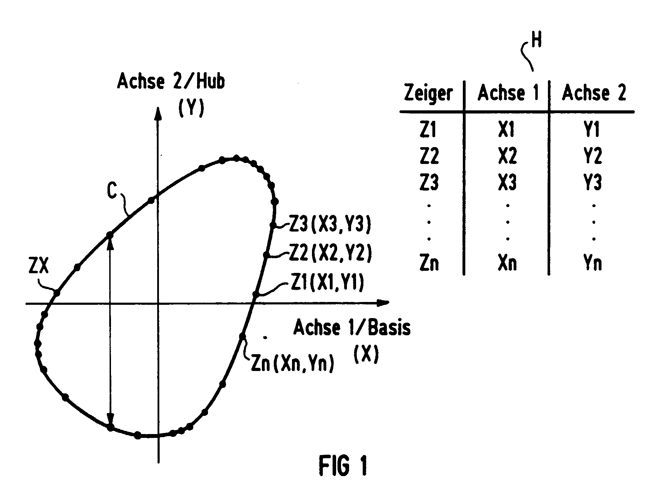

FIG 1 zeigt eine mehrdeutige, gekrümmte Kontur C, wobei die Mehrdeutigkeit darin besteht, das einem Basiswert (X) - wie durch einen Doppelpfeil angedeutet - zwei Hubwerte (Y) zu geordnet sind. Die Kontur C stellt den Querschnitt eines Werkstücks dar, das von einer Schleifscheibe bearbeitet wird. Zur Beschreibung bzw. Parametrierung der Kontur C werden als fiktive Leitgrößen die Zeiger Z1 bis Zn eingeführt, wobei jedem Zeigerwert die entsprechenden Koordinatenwerte als Bahnsteuerdaten X1 bis Xn, Y1 bis Yn zugeordnet und in einer Tabelle H abgelegt werden. Die Tabelle H enthält nun die vorgerechneten bzw. vorgegebenen Bahnsteuerdaten für die Achse 1(X) und die Achse 2(Y), wobei ein Wertepaar X, Y einen bestimmten Punkt der Kontur C beschreibt und damit einer Zeigerposition Z1 bis Zn zugeordnet ist. Aus FIG 1 ist ersichtlich, daß die Zeigerwerte beliebig gewählt bzw. an die Geometrie angepaßt werden können. So sind beispielsweise bei der eiförmigen Kontur C an der stärksten Krümmung die Zeigerwerte besonders eng gelegt, wogegen die Zeigerwerte an den nahezu linearen Teilstücken der Kontur C einen relativ großen Abstand aufweisen. Hierbei sei bemerkt, daß die Zeiger Zl bis Zn keiner reellen Achse der Maschine entsprechen und somit nicht zur Geometrie der Kontur C beitragen. Ein Zeiger deutet, wie der Name schon sagt, nur auf den momentanen Bearbeitungsort X, Y in der Tabelle hin.

In der in FIG 1 gezeigten Tabelle H sind lediglich zwei Bahnsteuerwerte X, Y abgelegt. Die Anzahl der Tabellenspalten kann aber so erweitert werden, daß auch n-dimensionale Bearbeitungen möglich sind. Die Programmierung des Zeigers ZX und damit der Anstoß der Bearbeitung erfolgt im Teileprogramm der numerischen Steuerung, die bei einer realen Achse die Angabe der Zielposition und der Zeigeränderungsgeschwindigkeit beinhaltet. Hierbei ist es auch möglich, den Zeiger mit realen Achsen der Maschine im Interpolationstakt interpolieren zu lassen. Die durch die Tabelleninterpolation selbst bewegten Achsen sind hiervon nicht ausgenommen.

Wenn die Kontur C, beispielsweise durch eine Schleifmaschine bearbeitet werden soll, ergeben sich mit zunehmenden Schleifscheibenverschleiß zunehmende Konturverfälschungen, d.h. Abweichungen von den Zeigerpositionen Z1 bis Zn. Bisher wurden diese Abweichungen innerhalb gewisser Grenzen toleriert, und erst bei Überschreitung der vorgegebenen Toleranzen wurden die Tabellenwerte umgeladen, also den Zeigern Z1 bis Zn neue Werte zugeordnet.

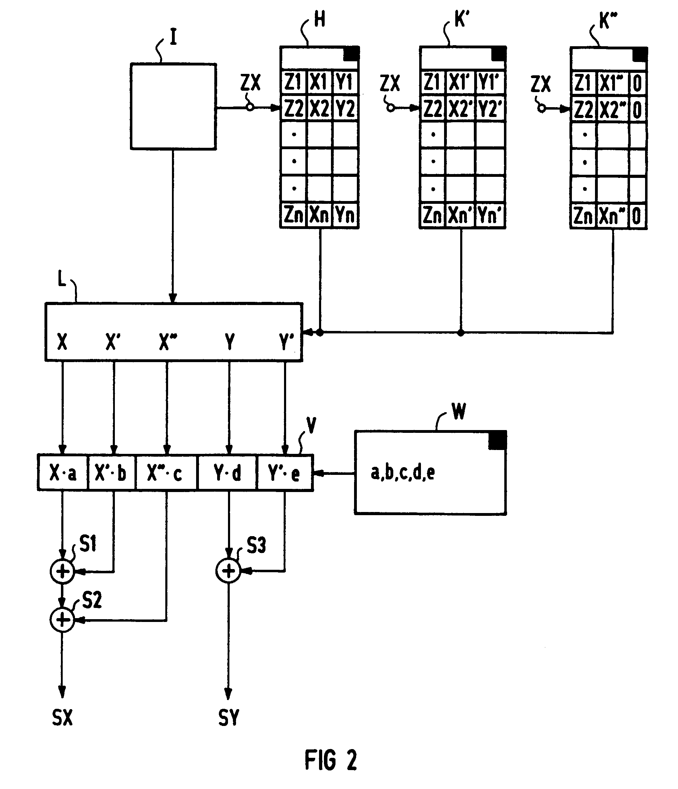

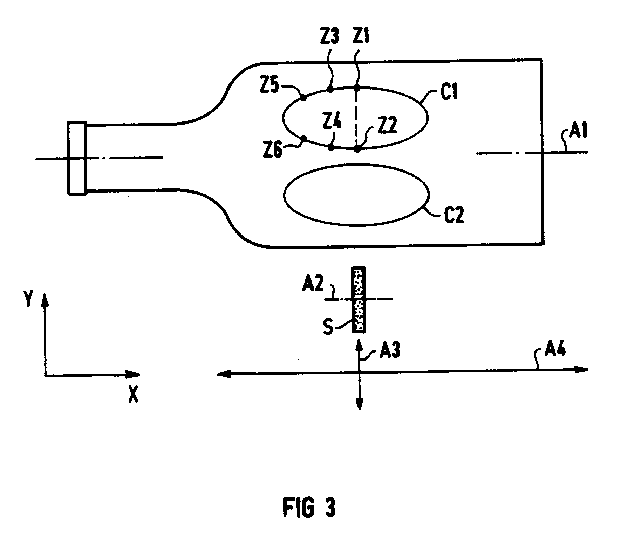

Mit der Erfindung läßt sich die Häufigkeit des Umladens der Tabellenwerte stark reduzieren. Es wurde nämlich herausgefunden, daß die Konturverzerrungen und die Vorschubverfälschungen in weiten Bereichen proportional zur Abnahme des Schleifscheibendurchmessers - oder allgemein, zu den Geometrieveranderungen des Werkzeugs sind. Die Bahnsteuerwerte werden daher mit Wichtungsfaktoren a bis e multipliziert, so daß die Konturgenauigkeit innerhalb sehr kleiner Fehlertoleranzen wieder gegeben ist. Auf die Wichtung der Bahnsteuerdaten wird im folgenden anhand von FIG 2 näher eingegangen. Ein weiterer Anwendungsbereich der Wichtungsfaktoren wird weiter unten anhand von FIG 3 erläutert.

FIG 2 zeigt das Blockschaltbild einer Steuerung zur Generierung von Stellgrößen SX, SY für eine Werkzeugmaschine durch Tabelleninterpolation. Es besteht aus einem Interpolator I, Tabellen H, K', K", einem Lageregler L, einem Wichtungsblock V sowie einer Wichtungstabelle W und Summiergliedern S1 bis S3. Der Speicher H beinhaltet die bereits aus FIG 1 bekannten Tabellenwerte und beschreibt somit die eigentliche Hubkurve der Kontur C (FIG 1).

Anhand der Speicher K' und K" soll zunächst eine weitere wesentliche Ausbildung der Erfindung erläutert werden. Reale Achsen unterliegen verschiedenen Fehlereinflüssen, die zu einer Abweichung zwischen Ist- und Sollposition führen. Diese Fehler können beispielsweise durch den Werkstückspanndruck, Temperatureinflüsse, die Werkzeug- oder Werkstücklast, etc., hervorgerufen werden. Diese Fehlereinflüsse können nur auf die jeweiligen, an der Bahnbewegung beteiligten Achsen bezogen sein, sie können sich aber auch auf andere Achsen auswirken. Theoretisch sind alle möglichen Kombinationen von Fehlerkopplungen der Achsen untereinander und mit sich selbst denkbar. Im Realfall werden sich die wesentlichen Fehlereinflüsse jedoch auf wenige Achsen reduzieren. Zum Ausgleich dieser Fehler sind in den Speichern K', K" Korrekturwerte abgelegt, die beispielsweise durch Vermessen der Istwerte bei den entsprechenden Achspositionen ermittelt werden. Diese Bahnsteuerkorrekturwerte X1' bis Xn', Y1' bis Yn' und X1" bis Xn" sind ebenfalls in Tabellenform zeigerwertbezogen abgelegt. Prinzipiell werden die Bewegungen der einzelnen Achsen, die an einer Bahn beteiligt sind, in so viele Einzeltabellen H, K', K" aufgeteilt und hinterlegt, wie es prozeßabhängig zu berücksichtigende Fehlereinflüsse mit unterschiedlicher Korrekturgröße gibt. - Im Ausführungsbeispiel sind im Speicher K" keine Korrekturwerte für Y" vorhanden.

Durch den Interpolator I werden die entsprechenden Zeigerpositionen ZX vorgegeben und somit die entsprechenden Hub- und Korrekturbahnsteuerdaten aus den Tabellen H, K', K" ausgelesen und an den Lageregler L übergeben. Von diesem gelangen die Bahnsteuerdaten an die Verknüpfungseinrichtung V in der sie mit den jeweiligen Wichtungsfaktoren a bis e, die aus dem Wichtungsspeicher W ausgelesen werden, verknüpft werden. Die gewichteten Bahnsteuerwerte für die X-Achse, d.h. der gewichtete eigentliche X-Wert X·a und die gewichteten Korrekturwerte X'·b, X"·c werden dann über die Summierglieder S1, S2 zum Stellwert SX addiert, analog dazu wird über den Summierer S3 der Stellwert SY aus y·d+y'e erzeugt. Die Stellwerte SX, SY sind also einerseits durch die Korrekturwerte aus den Tabellen K' und K" positionskorrigiert und andererseits ist der Werkstückverschleiß durch die Wichtungsfaktoren a bis e kompensiert.

Durch die Wichtungsfaktoren a bis e läßt sich aber nicht nur eine Korrektur des Werkzeugs, beispielsweise eines Schleifscheibenverschleisses erreichen, sondern es lassen sich auch durch Modifikation der Wichtungsfaktoren bei gleichbleibenden Bahnsteuerdaten verschiedene Konturformen erzeugen. Dies sei anhand von FIG 3 näher erläutert.

FIG 3 zeigt ein Werkstückformteil für die Flaschenherstellung. Auf dem Bauch der Flasche sollen, über ihren Umfang verteilt, charakteristische Ausprägungen, die die Konturen C1, C2 aufweisen, zu erkennen sein. Die Flaschenform wird durch die Bearbeitung mit der Schleifscheibe S erzielt, indem sich das Werkstück um die Achse Al dreht und die Schleifscheibe S, die sich um ihre Achse A2 dreht, Zustellbewegungen mit der Achse A3 zum Werkstück ausführt. In der dargestellten Position der Schleifscheibe S wird das Werkstück an der Querschnittslinie, die durch die Punkte Z1, Z2 verläuft, bearbeitet. Die Punkte Z3, Z4 bzw. Z5, Z6 auf der Kontur C1 lassen sich durch eine Verschiebung der Schleifscheibe entlang der Achse A4 (in negativer X-Richtung) erreichen. Die Bahnsteuerwerte, die die Zeigerwerte Z3, Z4 bzw. Z5, Z6 beinhalten müssen jedoch nicht neu berechnet oder vorgegeben werden, sondern können einfach durch die Verknüpfung der den Zeigerwerten Zl, Z2 zugeordneten Bahnsteuerdaten mit den entsprechenden Wichtungsfaktoren a bis e erzeugt werden. Analog dazu kann die rechts von der Symmetrielinie Z1, Z2 liegende Teilkontur C1 erzeugt werden, indem hier lediglich die Wichtungsfaktoren ein anderes Vorzeichen bekommen.

Mit einer weiteren analogen Anwendung der Wichtungsfaktor-Methode kann die eigentliche Hubkurve einer vorgerechneten Kontur C durch Variation der Vorzeichen einfach geändert werden. Somit können Teile und Konturen mit achsspezifischen Maßstabsfaktoren hergestellt werden und zwar in gleicher Form wie auch nach allen Seiten gespiegelt,

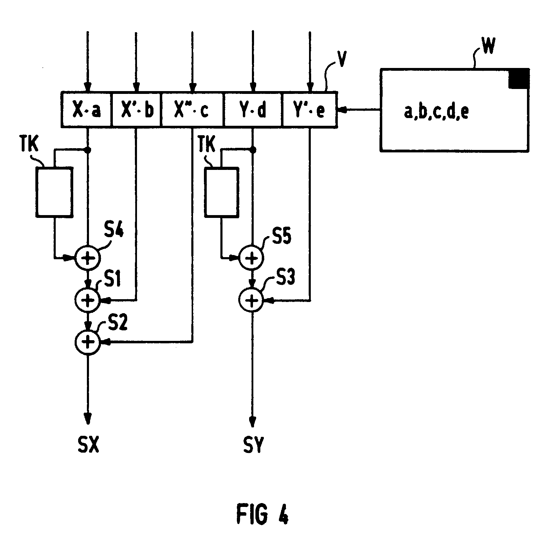

Anhand von FIG 4 wird eine weitere Ausbildung der Erfindung dargestellt, die für fortlaufend in einer Richtung fahrende Achsen (Rundachsen und auch Linearachsen), die als Hubachsen eine periodische Schwingung ausführen, anwendbar ist. Dazu ist am Ausgang der Verknüpfungseinheit bei den Bahnsteuerdaten *X·a,Y·a* der eigentlichen Hubbewegung eine Tabellenkettungsvorrichtung TK vorgesehen. Die Tabellenkettungsvorrichtung TK sorgt dafür, daß bei einer periodischen Hubbewegung als Startpunkt der Folgeperiode jeweils der Endpunkt zum Startpunkt der vorhergehenden Hubbewegung über die Summierglieder S4 und S5 addiert wird. Auf diese Weise wird die notwendige Beschreibung der Bewegung mittels Tabelle auf eine Periodenlänge begrenzt. In Verbindung mit den vorzeichengerichteten Wichtungsfaktoren kann die Schwingung der fortlaufenden Bewegungen in Amplitude und Richtung zusätzlich beeinflußt werden.

Mit dem beschriebenen Verfahren können also die Werte der Einzeltabellen spezifisch gewichtet und achsweise zu einer Gesamtbewegung zusammengefügt werden. Die neue Korrekturmöglichkeit eliminiert bzw. reduziert das sonst notwendige öftere Umladen der Werte in den Tabellen bei sich ändernden Prozeßparametern. Der bisher meistpraktizierte Kompromiß, z.B. beim Schleifscheibenverschleiß die Tabellenwerte erst umzuladen, wenn die Konturverzerrungen und die Vorschubverfälschungen an der Kontur zu hohe Werte annehmen, braucht nicht mehr eingegangen zu werden.

Statt wie bisher üblich jeweils nach einer Durchmesserabnahme der Schleifscheibe um z.B. mehr als 1 % (beispielsweise von 500 auf 495 mm bei neuer Scheibe, von 300 auf 297 mm bei bereits mehrfach abgerichteter Scheibe) die Tabellenwerte umzuladen und im Zwischenbereich mit reiner achsparalleler Korrektur in der Zustellachse zu arbeiten, wird nach dem erfindungsgemäßen Verfahren erst nach einer wesentlich größeren Durchmesserabnahme der Schleifscheibe ein Umladen der Tabellen erforderlich. Die zusätzlich vektoriell wirkende Korrektur die über die Wichtungsfaktoren a bis e an den Schleifscheibenradius anpaßbar ist, bedeutet:
- Gleichbleibende Konturgenauigkeit bei einem sich ändernden Schleifscheibenradius,
- gleichbleibende Vorschubgeschwindigkeit am Kontureingriffspunkt bei jedem Schleifscheibenradius,
- Reduzierung der Bearbeitungsnebenzeiten aufgrund selteneren Umladens der Tabellen.

## Patentansprüche

1. Verfahren zur numerischen Bahnsteuerung von mehrachsigen Maschinen mit folgenden Schritten:
1.1 für eine von der Maschine abzufahrende Bahnkurve, werden an ausgewählten und/oder vorberechneten Positionen Bahnsteuerdaten (X,Y) ermittelt und in einem Speicher (H) abgelegt,
1.2 jeder zusammengehörigen Menge von Bahnsteuerdaten wird ein eindimensionaler Zeiger (Z1...Zn) zugeordnet,
1.3 zur Steuerung der Bahnkurve werden die Bahnsteuerdaten (X,Y) durch Vorgabe einer Zeigerwertfolge (Z1...Zn)abgerufen,
gekennzeichnet durch die folgenden weiteren Schritte,
1.4 jedem Bahnsteuerdatum (X,Y) werden zeigerwertbezogen soviele Korrekturwerte (X',X",Y',Y") hinzugefügt, wie zu berücksichtigende Fehlergrößen vorliegen,
1.4 jedes Bahnsteuerdatum (X,Y) und jeder Korrekturwert (X',X",Y',Y") ist mit einer Wichtungsgröße (a,b,c,d,e) verknüpfbar,
1.5 die gewichteten Bahnsteuerdaten (X,Y) werden als Stellgrößen (SX,SY) an die Bahnsteuervorrichtungen der beteiligten Achsen ausgegeben,
1.5 für sich periodische wiederholende Achsbewegungen sind die Bahnsteuerdaten (X,Y) mit den zugeordneten Zeigern (Z1...Zn) nur für eine Periode erstellbar und die Folgeperioden werden durch Addition der Bahnsteuerdaten (X,Y) des jeweils letzten Zeigerwertes (Zn) zum ersten Zeigerwert (Z1) erzeugt.

2. Verfahren nach Anspruch 1, **dadurch gekennzeichnet**, daß zusätzliche Bahnsteuerdaten durch Interpolation zwischen zwei aufeinanderfolgenden Zeigerwerten (ZI, ZI+1) ermittelt werden.

## Claims

1. Method for numerical continuous-path control of multi-axis machines, having the following steps:
1.1 for a path line which is to be travelled over by the machine, continuous-path control data (X, Y) are determined at selected and/or precalculated positions and stored in a memory (H),
1.2 there is allocated to each related set of continuous-path control data a one-dimensional pointer (Z1 ... Zn),
1.3 in order to control the path line, the continuous-path control data (X, Y) are called up by input of a pointer-value sequence (Z1 ... Zn),
characterised by the following further steps,
1.4 there is added to each item of continuous-path control data (X, Y) in a pointer-value-related manner as many correction values (X', X", Y', Y") as there are error variables to be taken into account,
1.4 each item of continuous-path control data (X, Y) and each correction value (X', X", Y', Y") can be combined with a weighting variable (a, b, c, d, e),
1.5 the weighted continuous-path control data (X, Y) are output as manipulated variables (SX, SY) to the continuous-path control devices of the axes involved,
1.5 for periodically recurring axis movements, the continuous-path control data (X, Y) with the associated pointers (Z1 ... Zn) are plottable only for one period and the successive periods are generated by addition of the continuous-path control data (X, Y) of the pointer value (Zn) which is last in each case to the first pointer value (Z1).

2. Method according to claim 1, characterised in that additional continuous-path control data are determined by interpolation between two successive pointer values (ZI, ZI+1).

## Revendications

1. Procédé de commande de contournage numérique de machines à axes multiples comportant les étapes suivantes:
1.1 sont déterminées, pour une portion de trajectoire partant de la machine, et sont mémorisées dans une mémoire (H) des données (X, Y) de commandes continues à des positions calculées à l'avance et/ou sélectionnées
1.2 à chaque quantité homogène de données de commandés continues est associé un vecteur (Z1...Zn) à une dimension,
1.3 pour commander la portion de trajectoire, les données (X, Y) de commandes continues sont extraites par l'allocation d'une suite (Z1...Zn) de valeurs de vecteur, caractérisé par les étapes supplémentaires suivantes,
1.4 à chaque donnée (X, Y) de commandes continues sont ajoutées autant de valeurs (X', X" , Y', Y") de corrections rapportées à la valeur de vecteur qu'il y a de grandeurs d'erreurs à prendre en compte,
1.4 à chaque donnée (X, Y) de commande continue et à chaque valeur (X', X", Y', Y") de correction est combinée une valeur (a, b, c, d. e) de pondération,
1.5 les données (X. Y) de commandes continues pondérées sont fournies en tant que grandeurs (SX, SY) de réglage au dispositif de commandes continues des axes d'intérêt,
1.5 pour les déplacements d'axes se répétant de manière périodique, les données de commandes continues peuvent être réglées par les vecteurs (Z1, Zn) associés seulement pour une période et les périodes suivantes sont produites par l'addition des données (X, Y) de commandes continues de la dernière valeur (Zn) de vecteur à la première valeur (Z1) de vecteur.

2. Procédé suivant la revendication 1, caractérisé en ce que des données de commandes continues supplémentaires sont déterminées par interpolation entre deux valeurs (ZI, ZI+1) de vecteurs qui se suivent.
